# EUROPÄISCHE PATENTSCHRIFT

(11) **EP 1 144 231 B1**
(45) Veröffentlichungstag und Bekanntmachung des Hinweises auf die Patenterteilung: **21.06.2006**
(21) Anmeldenummer: 00943643.7
(22) Anmeldetag: 25.05.2000
(51) Int. Cl.: B60S 1/04

(54) **SCHEIBENWISCHERANLAGE**
WINDSCREEN WIPER ARRANGEMENT
ENSEMBLE ESSUIE-GLACE

(30) Priorität: 02.06.1999 DE 19925291
(43) Veröffentlichungstag der Anmeldung: 17.10.2001
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE2000/001696
(87) Internationale Veröffentlichungsnummer: WO 2000/073108

(56) Entgegenhaltungen:
- EP-A- 0 814 004
- FR-A- 2 767 293
- FR-A- 2 770 880
- PATENT ABSTRACTS OF JAPAN vol. 1999, no. 08, 30. Juni 1999 (1999-06-30) & JP 11 059334 A (MITSUBA CORP), 2. März 1999 (1999-03-02)

## Beschreibung

### Stand der Technik

Die Erfindung geht aus von einer Scheibenwischeranlage nach dem Oberbegriff des Anspruchs 1.

Scheibenwischeranlagen für Kraftfahrzeuge werden in der Regel mit einem Wischerträger, einer sogenannten Platine bzw. Rohrplatine - wenn der Wischerträger auch aus Rohren besteht -, an der Karosserie eines Kraftfahrzeugs befestigt. Die Platine trägt einen Wischerantrieb mit einem Wischermotor und einem daran angebauten Getriebe, dessen Abtriebswelle in der Regel über eine Kurbel und Gelenkstangen Kurbeln antreibt, die mit einer Antriebswelle für jeden Scheibenwischer fest verbunden sind. Die Platine bestimmt die Lage des Wischermotors zu Wischerlagern, in denen die Antriebswellen der Scheibenwischer gelagert sind. Sie nimmt ferner die durch den Wischerantrieb bedingten Kräfte auf.

Die Lagergehäuse der Wischerlager sind an den Enden der Platine befestigt oder angeformt. Die Platine ist unmittelbar über die Lagergehäuse oder über Befestigungsauger, die am Lagergehäuse, an der Platine und/oder der Motorplatine angeformt sind, an einer Fahrzeugkarosserie befestigt. In jedem Fall werden aber zusätzliche Bauteile benötigt, um die Scheibenwischeranlage weitgehend schwingungsfrei und verwindungssteif mit der Fahrzeugkarosserie zu verbinden.

Werden die Platinen aus vielen Bauteilen zusammengesetzt. führt dies zu zahlreichen Schnittstellen mit entsprechenden Toleranzen. Eine ungenaue Einstellung der Winkellagen und Positionen der Wischerlager in bezug auf den Wischermotor und/oder das Wischblatt verschlechtert das Wischergebnis. Um eine ausreichende Qualität der Verbindungen zu erhalten, müssen die zu montierenden Bauteile eine hohe Genauigkeit aufweisen, was wiederum den Fertigungsaufwand erhöht. Zusätzlich steigen durch die zahlreichen Montageschritte die Montagekosten.

Deshalb werden Wischerlager mit Befestigungsschrauben auch direkt an der Stirnwand der Fahrzeugkarosserie angeschraubt oder in Haltewinkeln aufgenommen, die an der Stirnwand angeschweißt sind. Dabei kann die Stirnwand aus Blech in einem Tiefziehverfahren hergestellt sein. Es sind auch Stirnwände mit einem Stranggußprofil als Trägerelement bekannt.

Aus der DE-GM 74 34 119 ist eine Rohrplatine bekannt, die aus einem Vierkantrohr hergestellt ist, an das eine als Motorplatine dienende Platte angeschweißt ist. An den Enden des Vierkantrohrs ist jeweils ein Wischerlager fixiert. Derartige Rohrplatinen oder Rohrrahmenanlagen sind trotz einer leichten Bauweise sehr stabil. Aus Kostengründen wird ein gerades Trägerrohr angestrebt, das keinen Vorbiegearbeitsgang erfordert. Die zur Befestigung des Wischerlagers dienenden Teile müssen aber so gestaltet sein, daß angreifenden Kräften genügend Widerstand entgegengebracht wird. Aus diesem Grund müssen sie eine bestimmte Festigkeit aufweisen, die zu erhöhten Materialeinsatz führt.

Eine andere Rohrplatine ist aus der DE 29 20 899 C2 bekannt, wobei in das Hohlprofil des Platinrohrs Rohrstutzen mit entsprechenden Ansätzen eingeschoben werden. Die Ansätze liegen wenigstens teilweise an den Wandungen des Platinrohrs an und weisen wenigstens eine Aussparung auf, in die Abschnitte des Platinrohrs eingedrückt sind, um eine formschlüssige Verbindung zwischen dem Platinrohr und dem Rohrstutzen zu bilden. In diesen Rohrstutzen sind die Wischerlager angeordnet. Gegenüber Schraubverbindungen ist die Anzahl der Teile reduziert, dennoch erfordert der Fügeprozeß noch zahlreiche vorgefertigte Einzelteile mit vielen Fertigungsschritten. Dies verteuert die Lagerhaltung und Logistik. Ferner haben die massiven Ansätze trotz der Aussparungen ein erhebliches Gewicht.

Aus der JP-A-11-59334 ist ein Wischerlager bekannt, bei dem der Zwischenraum zwischen einer Wischerwelle und einer Karosserieöffnung sowie an einem Durchgangsloch durch eine Abdekkung mittels einer Dichtungskappe abgedichtet ist. Diese besitzt eine Art Labyrinthdichtung, um den Spalt zur Wischerwelle hin abzudichten, während sie mit einer Umfangsnut in die Karosserieöffnung eingeknöpft ist und von außen mit einer Dichtlippe das Durchgangsloch durch die Verkleidung abdichtet. Der äußere Teil der Dichtungskappe mit der Dichtlippe ist über einen zylindrischen Teil und eine Art Faltenbalg mit dem eingeknöpften Teil verbunden.

### Vorteile der Erfindung

Erfindungsgemäß weist das Lagergehäuse des Wischerlagers drei Abstützbereiche auf, und zwar einen ersten der eine Längsachse des Lagergehäuses umfaßt und an einem Ende vorgesehen ist, das einem Wischer zugewandt ist. Ein zweiter und dritter Abstützbereich sind relativ zum ersten axial versetzt zum anderen Ende vorgesehen und ungefähr diametral zur Längsachse (18) des Lagergehäuses (10) zueinander angeordnet. Der erste Abstützbereich wird durch einen Flansch gebildet, während der zweite und der dritte zweckmäßigerweise als Steckfüße ausgebildet sind, die mit dem Lagergehäuse verbunden sind und in Taschen an der Haltevorrichtung eingreifen.

Im Lagergehäuse des Wischlagers ist eine Antriebswelle für einen Wischer gelagert, die mit einer Kurbel eines angebauten Koppelgetriebes verbunden ist. Die durch den Antrieb auf das Wischerlager ausgeübten Kräfte und Momente werden durch die drei Abstützbereiche sicher und präzise aufgenommen und auf kurzem Weg in die Fahrzeugkarosserie geleitet, ohne daß Schwingungen und Verformungen zu befürchten sind, die die Wischqualität beeinträchtigen könnten.

Auf eine besondere Platine kann im allgemeinen verzichtet werden, zumal wenn die Stirnwand als Druckgußteil hergestellt ist, an dem ein Haltewinkel mit einer Aufnahmeöffnung und Taschen für die Aufnahme von Steckfüßen angeformt sind, die mit dem Lagergehäuse verbunden sind. Dadurch wird die Teilevielfalt reduziert. Ferner wird der Montageaufwand verringert, indem das Lagergehäuse von unten durch die Aufnahmeöffnung gesteckt wird, wobei gleichzeitig die Steckfüße in die Taschen gleiten. Die Lage wird anschließend durch eine Schraubenmutter fixiert, die auf ein angegossenes Gewinde am Lagergehäuse geschraubt wird und einen Flansch des Lagergehäuses gegen den Haltewinkel preßt.

Die Reaktionskraft zur Auflagekraft des Wischblatts auf die Fahrzeugscheibe, die über die Antriebswelle auf das Lagergehäuse wirkt und nach oben etwa parallel zur Längsachse angreift, wirkt als Druckkraft auf das dem Hebelgetriebe zugewandte Ende des Lagergehäuses. Sie wird im Wischerlager durch die Abstützbereiche aufgenommen und unterstützt die Haltekraft der Verschraubung. Die Kraft, die durch das Moment des Wischermotors über die Kurbel eingeleitet wird, liegt ebenfalls innerhalb eines Stützdreiecks, das durch die drei Abstützbereiche gebildet wird, wobei die Stützbereiche relativ große Abstände voneinander aufweisen. Diese Art der Abstützung ist sehr stabil und ergibt eine optimale und gleichmäßige Kraftübertragung auf die Fahrzeugkarosserie.

Zweckmäßigerweise sind zwischen dem Lagergehäuse und dem Haltewinkel sowie an den Steckfüßen Entkopplungselemente aus einem gummielastischen Werkstoff vorgesehen. Durch diese wird verhindert, daß Umlegegeräusche der Wischblätter und Motorgeräusche über das Wischerlager auf die Fahrzeugkarosserie übertragen werden können. Die Entkopplungselemente verhindern gleichzeitig Kontaktkorrosion, die auftreten könnte, wenn bei metallische Werkstoffe für das Lagergehäuse und Magnesium oder Magnesiumlegierungen für die Stirnwand verwendet werden.

Die Entkopplungselemente sind damit sicher leicht zu montieren, insbesondere kann das Entkopplungselement am Haltewinkel einstückig ausgebildet sein und eine Umfangsnut aufweisen, so daß es schon bei der Vormontage in die Aufnahmeöffnung des Haltewinkels eingeknöpft werden kann. Bei einer zweiteiligen Ausführung wird ein Teil mit einem Ansatz in den Haltewinkel gesteckt, während ein zweites zugehöriges Teil auf den Flansch des Lagergehäuses gelegt wird. Die Entkopplungselemente zwischen den Steckfüßen und den Taschen besitzen Ausnehmungen, mit denen sie auf die Steckfüße gesteckt werden. Eine vereinfachte Variante sieht vor, die Entkopplungselemente auf die Steckfüße aufzuspritzen, so daß deren Montage entfällt.

Nach der Erfindung sind das Lagergehäuse des Wischerlagers und die Stirnwand der Fahrzeugkarosserie aus Druckguß hergestellt und an beiden Teilen sind Halteelemente angegossen oder angespritzt. Das Druckgießen bietet hinsichtlich Naßgenauigkeit, Oberflächengüte und Feingliedrigkeit der Abgüsse die besten Ergebnisse. Es lassen sich sehr komplexe Druckgußstücke mit verschiedenen Wanddicken herstellen. In der Regel kann auf jegliche Nachbearbeitung verzichtet werden, so daß geringe Fertigungskosten anfallen. Schließlich tragen Druckgußteile dazu bei, das Gewicht des Bauteil zu reduzieren.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung eines Lagergehäuses,
- Fig. 2: eine perspektivische Darstellung eines teilmontierten Wischlagers,
- Fig. 3: einen Teillängsschnitt des Wischlagers mit einem einteiligen Entkopplungselement entlang der Linie III-III in Fig.2 und
- Fig. 4: eine Variante zu Fig. 3 mit einem zweiteiligen Entkopplungselement.

### Beschreibung der Ausführungsbeispiele

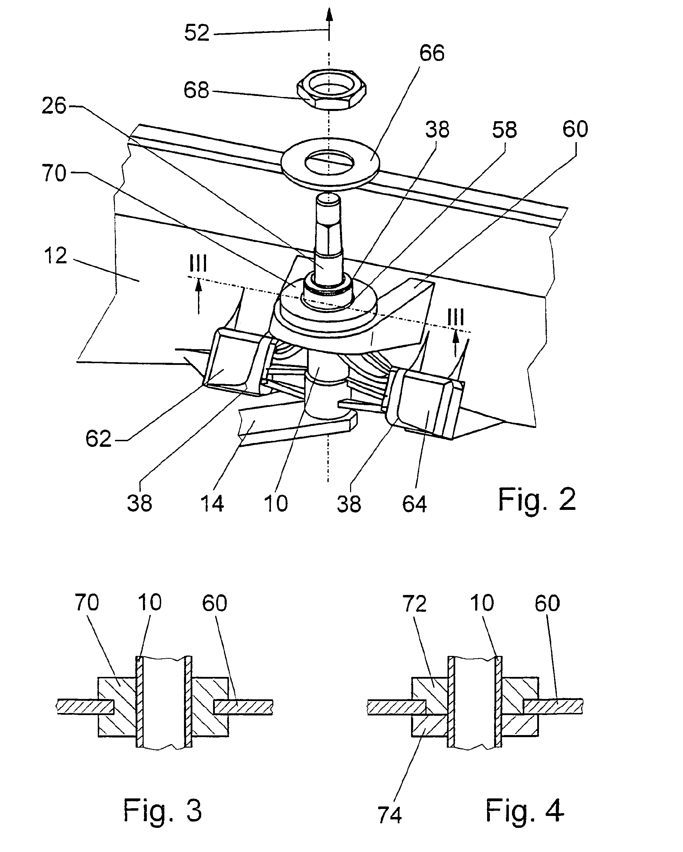

Ein Wischlager einer Scheibenwischeranlage ist an einer Stirnwand 12 einer Fahrzeugkarosserie befestigt. Es besitzt ein Lagergehäuse 10, in dem eine Antriebswelle 26 eines nicht näher dargestellten Schweibenwischers gelagert ist. Sie wird von einem Wischermotor über ein Hebelgetriebe angetrieben, dessen Kurbel 14 mit ihrem dem Scheibenwischer abgewandten Ende fest verbunden ist (Fig. 2).

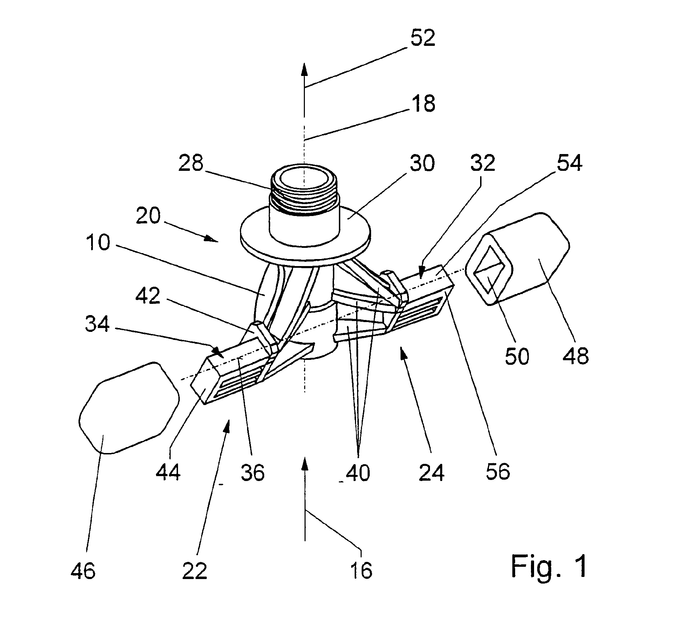

Figur 1 zeigt das Lagergehäuse 10, auf das eine von der Kurbel 14 eingeleitete Kraft 16 entlang einer Längsachse 18 des Lagergehäuses 10 angreift. Zur Momentabstützung und Kraftübertragung in die Fahrzeugkarosserie besitzt das Lagergehäuse 10 drei Abstützbereiche 20, 22 und 24, deren Abstände voneinander relativ groß sind.

Der erste Abstützbereich 20 wird von einem Flansch 30 gebildet, der an dem Lagergehäuse 10 an einem dem Wischer zugewandten Ende angegossen ist. Einen zweiten Abstützbereich 22 und einen dritten Abstützbereich 24 bilden die Steckfüße 32 und 34, die entlang der Längsachse 18 versetzt am kurbelseitigen des Lagergehäuses 10 angegossen sind. Die Steckfüße 32 und 34 sind in einem Abstand 38 ungefähr diametral zur Längsachse 18 zueinander angeordnet und liegen in einer gemeinsamen Ebene 36, die leicht geneigt zur Längsachse 18 des Lagergehäuses 10 verläuft.

Vorteilhafterweise sind die Steckfüße 32 und 34 durch mehrere Stege 40 mit dem Lagergehäuse 10 verbunden, so daß bei verringertem Materialeinsatz trotzdem eine genügend große Torsions- und Biegefestigkeit vorhanden ist. Weiterhin weisen sie die Form eines Quaders auf, dessen Seitenflächen 54 und 56 als Aufnahme- und Führungsflächen dienen. Die Stirnfläche 44 und eine an der anderen Stirnseite angeformte Anlagefläche 42 der Steckfüße 32 und 34 unterstützen die Seitenflächen 54, 56 bei der Kraft- und Momentenabstützung. Sie bilden ferner einen Anschlag für aufgesteckte, gummielastische Entkopplungselemente 46 und 48, die eine entsprechende Ausnehmung 50 besitzen. Als alternative und vereinfachte Lösung können diese Entkopplungselemente durch aufgespritzte ersetzt werden.

Erfindungsgemäß ist das Lagergehäuse 10 ein Druckgußteil und weist an einem den Wischer zugewandten Ende ein angespritztes Gewinde 28 auf. Das Lagergehäuse 10 ist konstruktiv für den Druckguß so gestaltet, daß es sich von den Steckfüßen 32 und 34 zum angespritzten Gewinde 28 hin in der Hauptrichtung der Entformung verjüngt.

Um das Lagergehäuse 10 an der Stirnwand 12 der Fahrzeugkarosserie zu befestigen, besitzt die Stirnwand 12 einen Haltewinkel 60 mit einer Aufnahmeöffnung 58, in die zum Einstecken das wischerseitige Ende des Lagergehäuses 10 eingesteckt wird. Ferner sind an der Stirnwand 12 nach unten und zur Lagerachse hin offene Taschen 62 und 64 vorgesehen (Fig. 2), in die die Steckfüße 32 und 34 bei der Montage gleiten und dann gehalten werden. Die Stirnwand 12 ist aus Druckguß hergestellt, wobei der Haltewinkel 60 und die Taschen 62 und 64 angegossen sind. Die Hauptentformung erfolgt zweckmäßigerweise in Pfeilrichtung 52 und liegt somit in der Montagerichtung des Wischerlagers.

Das Lagergehäuse 10 mit den aufgesteckten und/oder aufgespritzten Entkopplungselementen 46 und 48 wird in Pfeilrichtung 52 in den Haltewinkel 60 und die Taschen 62 und 64 montiert. Um das Zusammenfügen der Bauteile zu erleichtern, sind diese konstruktiv so gestaltet, daß die einander zugewandten Kanten 38 des Lagergehäuses 10 und/oder des Haltewinkels 60 bzw. der Taschen 62 und 64 als Zentrierhilfe abgerundet und/oder abgeschrägt sind.

Ebenfalls in Pfeilrichtung 52 wird ein die Antriebswelle 26 in das Lagergehäuse 10 gefügt. Sie überragt das Lagergehäuse 10 am wischerseitigen Ende, auf das ein nicht dargestellter Wischarm montiert werden kann. In die Aufnahmeöffnung 58 des Haltewinkels 60 wird bei der Vormontage ein gummielastisches Entkopplungselement 70 eingeknöpft, das sowohl eine Schwingungsübertragung von dem Lagergehäuse 10 auf die Fahrzeugkarosserie als auch eine Korrosion zwischen dem Lagergehäuse 10 und dem Haltewinkel 60 verhindert (Fig. 3).

Eine weitere Variante der Dämpfung zeigt Figur 4, wobei das Entkopplungselement aus den zwei Teilen 72 und 74 besteht. Nach dem Montageablauf ist es vorgesehen, daß auf die dem Wischer zugewandte Seite des Entkopplungselements 70 oder 72 eine Scheibe 66 gefügt wird und daß auf das Gewinde 28 eine Mutter 68 geschraubt wird, die das Lagergehäuses 10 am Haltewinkel 60 festhält.

## Patentansprüche

1. Scheibenwischeranlage mit mindestens einem Wischerlager, das über mindestens einen Abstützbereich (20) an einer Fahrzeugkarosserie eines Fahrzeugs befestigt ist, **dadurch gekennzeichnet, daß** das Lagergehäuse (10) des Wischerlagers drei Abstützbereiche (20, 22, 24) aufweist, und zwar einen ersten (20), der eine Längsachse (18) des Lagergehäuses (10) umfaßt und an einem Ende vorgesehen ist, das einem Wischer zugewandt ist, einen zweiten (22) und dritten Abstützbereich (24), die relativ zum ersten axial versetzt zum anderen Ende vorgesehen und ungefähr diametral zur Längsachse (18) des Lagergehäuses (10) zueinander angeordnet sind.

2. Scheibenwischeranlage nach Anspruch 1, **dadurch gekennzeichnet, daß** der erste Abstützbereich (20) von einem Flansch (30) am Lagergehäuse (10) und die beiden anderen Abstützbereiche (22, 24) durch zwei Steckfüße (32, 34) gebildet werden, die am Lagergehäuse (10) im wesentlichen quer zu seiner Längsachse (18) angeformt sind und in Taschen (62, 63) einer Haltevorrichtung (12) des Lagergehäuses (10) eingreifen.

3. Scheibenwischeranlage nach einem der vorhergehenden Ansprüche, **dadurch gekennzeichnet, daß** das Lagergehäuse (10) ein angespritztes Gewinde (28) aufweist, das sich in Längsrichtung (52) nach außen an den Flansch (30) anschließt.

4. Scheibenwischeranlage nach einem der Ansprüche 2 oder 3, **dadurch gekennzeichnet, daß** die Steckfüße (32, 34) zusätzlich zu im wesentlichen radial verlaufenden Führungsflächen (54, 56) quer zu diesen gerichtete Anschlagflächen (42, 44) aufweisen.

5. Scheibenwischeranlage nach einem der vorhergehenden Ansprüche, **dadurch gekennzeichnet, daß** eine Stirnwand (12) der Fahrzeugkarosserie aus Druckguß hergestellt ist und einen Haltewinkel (60) mit einer Aufnahmeöffung (58) zum Einstecken des wischerseitigen Endes des Lagergehäuses (10) sowie Taschen (62, 64) zur Aufnahme der Steckfüße (32, 34) aufweist.

6. Scheibenwischeranlage nach Anspruch 5, **dadurch gekennzeichnet, daß** der Haltewinkel (60) und die Taschen (62, 64) an der Stirnwand (12) angegossen sind.

7. Scheibenwischeranlage nach einem der vorhergehenden Ansprüche, **dadurch gekennzeichnet, daß** die einander zugewandten Kanten (38) des Lagergehäuses (10) und/oder des Haltewinkels-(60) bzw. der Taschen (62, 64), als Zentrierhilfe abgerundet und/oder abgeschrägt sind.

8. Scheibenwischeranlage nach einem der Ansprüche 5 bis 7, **dadurch gekennzeichnet, daß** die Stirnwand (12) so gestaltet ist, daß die Hauptrichtung (52) ihrer Entformung entgegengesetzt zur Montagerichtung des Wischerlagers liegt.

9. Scheibenwischeranlage nach einem der vorhergehenden Ansprüche, **dadurch gekennzeichnet, daß** das Lagergehäuse (10) so gestaltet ist, daß seine Entformung und Montage in einer gleichen Hauptrichtung (52) erfolgt.

10. Scheibenwischeranlage nach einem der vorhergehenden Ansprüche, **dadurch gekennzeichnet, daß** zwischen dem Lagergehäuse (10) und dem Haltewinkel (60) sowie zwischen den Steckfüßen (32, 34) und den Taschen (62, 64) gummielastische Entkopplungselemente (70, 72, 74; bzw. 46, 48,) vorgesehen sind.

11. Scheibenwischeranlage nach Anspruch 10, **dadurch gekennzeichnet, daß** die Entkopplungselemente (46, 48) auf die Steckfüße (32, 34) aufgesteckt oder aufgespritzt sind.

12. Scheibenwischeranlage nach Anspruch 10, **dadurch gekennzeichnet, daß** bei der Vormontage das Entkopplungselement (70) in die Aufnahmeöffung (58) des Haltewinkels (60) eingeknöpft ist.

13. Scheibenwischeranlage nach Anspruch 10, **dadurch gekennzeichnet, daß** das Entkopplungselement (72, 74) für die Aufnahmeöffung (58) des Haltewinkels (60) zweiteilig ist.

## Claims

1. Wiper system having at least one wiper bearing which is fastened to a vehicle body of a vehicle via at least one supporting region (20), **characterized in that** the bearing housing (10) of the wiper bearing has three supporting regions (20, 22, 24), specifically a first supporting region (20) which includes a longitudinal axis (18) of the bearing housing (10) and is provided at one end which faces a wiper, a second supporting region (22) and third supporting region (24), which regions are provided relative to the first supporting region and offset axially with respect to the other end, and with respect to each other are arranged approximately diametrically with respect to the longitudinal axis (18) of the bearing housing (10).

2. Wiper system according to Claim 1, **characterized in that** the first supporting region (20) is formed by a flange (30) on the bearing housing (10) and the two other supporting regions (22, 24) are formed by two plug-in feet (32, 34) which are integrally formed on the bearing housing (10) essentially transversely with respect to its longitudinal axis (18) and engage in pockets (62, 63) in a holding device (12) of the bearing housing (10).

3. Wiper system according to one of the preceding claims, **characterized in that** the bearing housing (10) has an injection-moulded thread (28) outwardly connected in the longitudinal direction (52) to the flange (30).

4. Wiper system according to one of Claims 2 or 3, **characterized in that**, in addition to guide surfaces (54, 56) essentially running radially, the plug-in feet (32, 34) have stop surfaces (42, 44) directed transversely with respect to the said guide surfaces.

5. Wiper system according to one of the preceding claims, **characterized in that** a front wall (12) of the vehicle body is produced by die-casting and has a holding bracket (60) having a receiving opening (58) for plugging in the wiper-side end of the bearing housing (10) and pockets (62, 64) for receiving the plug-in feet (32, 34).

6. Wiper system according to Claim 5, **characterized in that** the holding bracket (60) and the pockets (62, 64) are cast onto the front wall (12).

7. Wiper system according to one of the preceding claims, **characterized in that** the mutually facing edges (38) of the bearing housing (10) and/or of the holding bracket (60) and the pockets (62, 64) are rounded and/or bevelled as a centring aid.

8. Wiper system according to one of Claims 5 to 7, **characterized in that** the front wall (12) is designed in such a manner that the main direction (52) of its release from the mould lies opposed to the installation direction of the wiper bearing.

9. Wiper system according to one of the preceding claims, **characterized in that** the bearing housing (10) is designed in such a manner that its release from the mould and installation takes place in a same main direction (52).

10. Wiper system according to one of the preceding claims, **characterized in that** elastomeric decoupling elements (70, 72, 74; and 46, 48,) are provided between the bearing housing (10) and the holding bracket (60) and between the plug-in feet (32, 34) and the pockets (62, 64).

11. Wiper system according to Claim 10, **characterized in that** the decoupling elements (46, 48) are plugged or injection-moulded onto the plug-in feet (32, 34).

12. Wiper system according to Claim 10, **characterized in that**, during the prior installation, the decoupling element (70) is threaded into the receiving opening (58) of the holding bracket (60).

13. Wiper system according to Claim 10, **characterized in that** the decoupling element (72, 74) for the receiving opening (58) of the holding bracket (60) is in two parts.

## Revendications

1. Installation d'essuie-glace comportant au moins un palier d'essuie-glace fixé par l'intermédiaire d'au moins une zone d'appui (20) à une carrosserie de véhicule,
**caractérisée en ce que**
le boîtier (10) du palier d'essuie-glace comporte trois zones d'appui (20, 22, 24), à savoir une première zone (20) comprenant l'axe longitudinal (18) du boîtier de palier (10) et prévue à l'extrémité tournée vers le balai d'essuie-glace, une seconde zone d'appui (22) et une troisième zone d'appui (24) décalées axialement par rapport à la première zone vers l'autre extrémité et sensiblement diamétralement opposées par rapport à l'axe longitudinal (18) du boîtier de palier (10) .

2. Installation d'essuie-glace selon la revendication 1,
**caractérisée en ce que**
la première zone d'appui (20) est formée par une bride (30) du boîtier de palier (10) et les deux autres zones d'appui (22, 24) sont formées par deux pieds d'emmanchement (32, 34) formés sur le boîtier de palier (10) pratiquement transversalement à son axe longitudinal (18) et venant dans des poches (62, 63) dans un dispositif de fixation (12) du boîtier de palier (10).

3. Installation d'essuie-glace selon l'une des revendications précédentes,
**caractérisée en ce que**
le boîtier de palier (10) comporte un filetage (8) injecté sur le boîtier et qui fait suite dans la direction longitudinale (52) vers l'extérieur de la bride (30).

4. Installation d'essuie-glace selon l'une des revendications 2 ou 3,
**caractérisée en ce que**
les pieds d'enfichage (32, 34) comportent en plus de surfaces de guidage (54, 56) dirigées essentiellement radialement, des surfaces d'appui (42, 44) dirigées transversalement à celles-ci.

5. Installation d'essuie-glace selon l'une des revendications précédentes,
**caractérisée en ce que**
la paroi frontale (12) de la carrosserie de véhicule est en fonte sous pression et comporte une console de fixation (60) munie d'un orifice de réception (58) pour enficher l'extrémité côté balai d'essuie-glace du boîtier de palier (10) ainsi que des poches (62, 64) pour recevoir les pieds enfichés (32, 34).

6. Installation d'essuie-glace selon la revendication 5,
**caractérisée en ce que**
la console de fixation (60) et les poches (62, 64) sont intégrées à la paroi frontale (12) par coulée.

7. Installation d'essuie-glace selon l'une quelconque des revendications précédentes,
**caractérisée en ce que**
les arêtes (38) du boîtier de palier (10) et/ou de la cornière de fixation (60) ou des poches (62, 64) tournées les unes vers les autres sont arrondies et/ ou en biais pour faciliter le centrage.

8. Installation d'essuie-glace selon l'une des revendications 5 à 7, **caractérisée en ce que**
la paroi frontale (12) est conçue pour que la direction principale (52) de son démoulage soit opposée à la direction de montage du palier d'essuie-glace.

9. Installation d'essuie-glace selon l'une quelconque des revendications précédentes,
**caractérisée en ce que**
le boîtier de palier (10) est réalisé pour que son démoulage et son montage se fassent suivant la même direction principale (52).

10. Installation d'essuie-glace selon l'une quelconque des revendications précédentes,
**caractérisée par**
des éléments de découplage élastiques comme du caoutchouc (70, 72, 74 ; ou 46, 48) prévus entre le boîtier de palier (10) et la console de fixation (60) ainsi qu'entre les pieds d'enfichage (32, 34) et les poches (62, 64).

11. Installation d'essuie-glace selon la revendications 10,
**caractérisée en ce que**
les éléments de découplage (46, 48) sont engagés sur les pieds d'enfichage (32, 34) ou sont réalisés sur ceux-ci par injection.

12. Installation d'essuie-glace selon la revendications 10,
**caractérisée en ce que**
pour le préassemblage, l'élément de découplage (70) est enfoncé comme un bouton dans l'orifice de réception (58) de la console de fixation (60).

13. Installation d'essuie-glace selon la revendications 10,
**caractérisée en ce que**
l'élément de découplage (72, 74) est divisé en deux parties pour recevoir l'orifice de réception (58) de la console de fixation (60).
